# EUROPEAN PATENT SPECIFICATION

(11) **EP 1 387 870 B1**
(45) Date of publication and mention of the grant of the patent: **23.11.2005**
(21) Application number: 02747305.7
(22) Date of filing: 07.05.2002
(51) Int. Cl.: C09B 67/22, C09B 67/48, C08K 5/3415, C09D 5/00

(54) **NEW CRYSTAL MODIFICATION OF DIKETOPYRROLPYRROLE SOLID SOLUTION PIGMENT**
NEUE KRISTALLMODIFIKATION EINER FESTEN LÖSUNG VON EINEM DIKETOPYRROLOPYRROLPIGMENT
NOUVELLE MODIFICATION CRISTALLINE D'UN PIGMENT EN SOLUTION SOLIDE DU TYPE DICETOPYRROLPYRROLE

(30) Priority: 14.05.2001 US 290768 P; 14.05.2001 US 290769 P
(43) Date of publication of application: 11.02.2004
(73) Proprietor: Ciba Specialty Chemicals Holding Inc., 4057 Basel (CH)
(72) Inventor: HAO, Zhimin, CH-4125 Riehen (CH); HENDI, Shivakumar, Basalingapp, Newark, DE 19702 (US)
(86) International application number: PCT/EP2002/005036
(87) International publication number: WO 2002/092699

(56) References cited:
- EP-A- 0 256 983
- EP-A- 0 704 497
- EP-A- 0 764 696
- EP-A- 0 765 919
- EP-A- 0 794 235
- EP-A- 0 962 499

## Description

The present invention relates to host-guest solid solutions formed from a mixture of 1,4-diketo-3,6-bis(4-chlorophenyl)pyrrolo[3,4-c]pyrrole (para-dichloro DPP) and 1,4-diketo-3,6-bis(4-methylphenyl)pyrrolo[3,4-c]pyrrole (para-dimethyl DPP). The mixture contains between 30-80 mol percent of para-dimethyl DPP and 70-20 mol percent of para-dichloro DPP. The present invention further relates to the preparation of the solid solutions, and to the use of the solid solutions and binary solid compounds as pigments.

In general, if a multi-component pigment shows an x-ray diffraction pattern that differs from the x-ray diffraction pattern of a physical mixture of its components, the pigment is called a solid solution. There are mainly two types of clearly-defined solid solutions, a "host-guest" type solid solution and a "binary solid compound" type solid solution. For clarification a "mixed crystal" type solid solution is derived from an equimolar composition and the binary solid compound has the crystal structure of the mixed crystal but has a distinctly small range of pigment composition.

A "host-guest" solid solution is a solid solution wherein the x-ray diffraction pattern of the solid solution is identical to the x-ray diffraction pattern of one of the components, called the "host". The host component is said to accept the other component, the "guest", into its crystal lattice.

Binary solid compounds are solid solutions wherein the two components associate with each other to produce an x-ray diffraction pattern which is different from the x-ray diffraction pattern of any component or a physical mixture of the components.

Solid solutions and binary solid compounds of quinacridones are known in the art for their pigmentary properties. Quinacridone solid solutions and binary solid compounds are described in U.S. Pat. No. 3,160,510.
Solid solutions containing two or more of the diketo-pyrrolo[3,4-c]-pyrrole (DPP) series of pigments and their pigmentary properties are also known in the art and are generally disclosed in U.S. Pat. No. 4,783,540. Example 1 illustrates a mixture of about 4% para-dimethyl DPP with about 96% para-dichloro DPP by an acid refluxing procedure. The resulting solid solution pigment has an X-ray diffraction pattern that differs from the X-ray diffraction pattern of the corresponding physical mixture of starting products. U.S. Pat. No. 5,529,623 describes pigmentary ternary solid solutions of pyrrolo[3,4-C]pyrroles and quinacridones. A binary solid compound type solid solution is also described that consists of 35 to 45 mol percent of unsubstituted DPP and 55 to 65 mol percent of para-dichloro DPP. The binary solid compound is formed by grinding in a ball mill. The resulting solid solution pigment has an X-ray diffraction pattern that is significantly different from that of the physical mixture of the two pigments.
U.S. Pat. No. 5,708,188 describes mixed crystals and solid solutions of 1,4-diketopyrrolopyrroles. Example 11 illustrates the formation of a mixed crystal from a mixture of equimolar amounts of para-dichloro DPP and para-dimethyl DPP. The crystal structure is virtually identical to that of the corresponding asymmetrical diketopyrrolopyrrole (see Scheme-01). The pigments are dissolved in an organic solvent, heated and isolated by filtration.

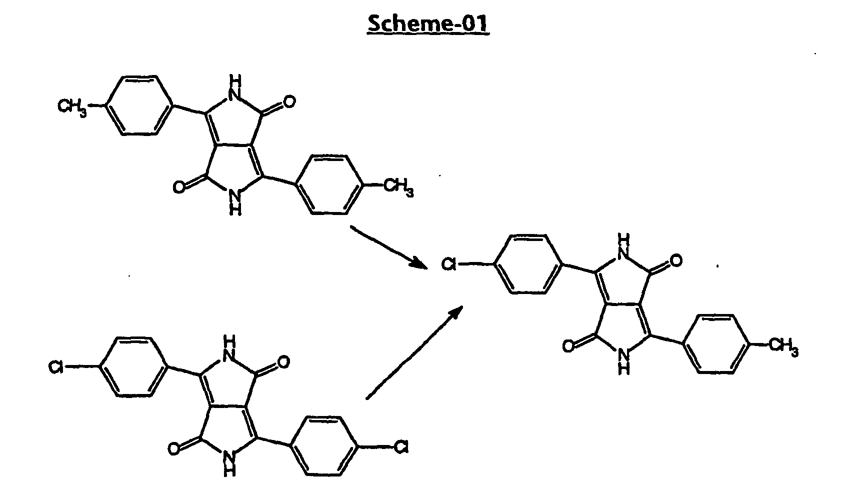

U.S. Pat. No. 6,036,766 also describes mixed crystals and solid solutions of 1,4-diketopyrrolopyrroles as part of a ternary solid solution.

Solid solutions containing a DPP-type pigment and a pigment of another class, for example, a quinacridone or quinacridonequinone, are described in U.S. Pat. No. 4,810,304. U.S. Pat.

No. 5,472,496 also describes solid solutions of pyrrolo[3,4-C]pyrroles with quinacridonequinones. U.S. Pat. No. 4,810,304 describes solid solutions of pyrrolo[3,4-C]pyrroles with quinacridones.

U.S. Pat. No. 5,821,373 describes solid solutions of 1,4-diketopyrrolopyrroles using a bis(biphenyl) DPP with either a second DPP or a quinacridone.

U.S. Pat. No. 5,756,746 describes monophase solid solutions containing asymmetric pyrrolo[3,4-C]pyrroles as hosts.

Surprisingly, a combination of 70-20 mol percent of para-dichloro DPP and 30-80 mol percent para-dimethyl DPP produces a host-guest solid solution instead of a mixed crystal when prepared by specific methods of preparation.

A combination of 70-20 mol percent of the para-dichloro DPP and 30-80 mol percent of the para-dimethyl DPP, when treated in a high boiling organic solvent at elevated temperature, or when submitted to a dry milling procedure in the presence of anhydrous aluminum sulfate, produces a small particle size, bright red pigment showing an X-ray diffraction pattern of the para-dimethyl DPP. In other words, host-guest solid solutions are formed wherein the host is para-dimethyl DPP.

The resulting host-guest solid solutions, which are monophase solid solutions, are useful for the coloration of polymeric materials like paints, plastics, inks and fibers.
Figure 1 is an X-ray diffraction pattern of the para-dichloro-DPP from example 1.
Figure 2 is an X-ray diffraction pattern of the para-dimethyl-DPP from example 2.
Figure 3 is an X-ray diffraction pattern of the 50:50 molar mixture of para-dichloro-DPP and para-dimethyl-DPP from example 3.
Figure 4 is an X-ray diffraction pattern of the 47 :53 molar mixture of para-dichloro-DPP and para-dimethyl-DPP from example 6.
Figure 5 is an X-ray diffraction pattern of the 37:63 molar mixture of para-dichloro-DPP and para-dimethyl-DPP from example 8.

For consistency, the meaning of "single-phase solid solution", "multiphase solid solution" and "mixed crystal", therefore, should be taken from the following definitions, which have been adapted to the current, improved state of knowledge of such systems.

A multiphase solid solution possesses no precise, uniform crystal lattice. It differs from a physical mixture of its individual components in that the crystal lattice of at least one of its components is partially or completely altered. In comparison to the physical mixture of the components, the signals in the X-ray diffraction diagram are shifted or altered in their double glancing angle (2Θ). In general, different proportions of the components produce different results.

A single-phase (or monophase) solid solution possesses a crystal lattice which is identical with the crystal lattice of one of its components. One component is embedded as the "guest" in the crystal lattice of the other component, which acts as "host". Within certain limits, different proportions of the components produce almost identical results.

A mixed crystal possesses a precise composition and a uniform crystal lattice, which is different from the crystal lattices of all of its components. If different proportions of the components lead, within certain limits, to the same result, then these compositions are characterized as binary solid compounds. The binary solid compounds therefore resemble the crystal structure of the mixed crystals.
The X-ray diffraction pattern of the host-guest solid solution according to the present invention is identical to the X-ray diffraction pattern of a para-dimethyl DPP pigment.

The term "identical" indicates that the X-ray spectrum of the pigment compositions according to the invention corresponds to the X-ray spectrum of the para-dimethyl DPP as the case may be (depending on the composition), except that characteristic glancing angle shifts of the individual reflections may be possible as a result of lattice expansion (shift toward smaller glancing angles) or lattice contraction (shift toward larger glancing angles) in the region of +/- 0.5 2 theta, or as a result of variations in intensity.

The X-ray diffraction pattern is characterised by the following diffraction lines:

| Double glancing angles (2 theta) | Relative intensity |
|---|---|
| 7.4 +/- 0.5 | strong |
| 15.5 +/- 0.5 | medium |
| 26.7 +/- 0.5 | strong |

The present solid solutions can be prepared by milling methods (Method A) or by heating a binary component mixture in a high boiling organic solvent (Method B). Both methods are illustrated in further detail below.

### Method A:

The present solid solutions can be prepared by a method of preparing a pigment comprising
a) forming a pigment mixture consisting essentially of about 30 to 70 weight percent para-dimethyl DPP and about 70 to 30 weight percent para-dichloro DPP,
b) milling the pigment mixture for sufficient time to produce a host-guest solid solution.

In general the binary component mixture consisting of para-dimethyl DPP and para-dichloro DPP is milled by the conventional dry milling methods for an extended period of time ranging from 5 to 30 hours, for example, greater than 15 hours, in particular, 24 hours or more. The milling period required depends on the particle size of the pigment crudes, with larger particle crudes requiring a longer milling period.

The mixture contains from 30-80 mol percent para-dimethyl DPP and 70-20 mol percent para-dichloro DPP. A further embodiment provides that the mixture consists essentially of 65-35 mol percent para-dimethyl DPP and 35-65 mol percent of para-dichloro DPP. A further embodiment provides that the mixture consists of 45-55 mol percent para-dimethyl DPP and 55-45 mol percent of para-dichloro DPP. A still further embodiment employs an equimolar mixture of the said DPP pigments.

Particularly suitable dry milling methods use dry salt as a milling aid to assist in particle size reduction at about a 1:2 to 1:20 pigment to salt ratio, with or without small amounts of organic solvents or milling aids. The dry salts used in the pigment grinding procedure include sodium chloride, calcium chloride, sodium sulfate or aluminum sulfate with or without water of crystallization. The dry salt is added at a ratio of 1:3 to 1:15, alternatively 1:3 to 1:10, 1:3 to 1:5. A particularly useful mixture provides 40 parts of hydrated aluminum sulfate for every 10 parts of pigment component. It can be of advantage to include small amounts of a variety of organic solvents, such as high boiling hydrocarbons and dibasic esters, in particular dimethyl succinate and/or dimethyl glutarate, during the milling. The milling media include metal, glass or ceramic balls, plastic granules or sand grains. Additionally, a surfactant is optionally added to the milling recipe. Useful surfactants include sodium or isopropylammonium salts of dodecyl benzenesulfonic acid or decyl trimethylammonium chloride. The workup involves separating the mixture of pigment and salt from the milling media followed by dilute acid extraction and isolation of the pigment by filtration.

### Method B:

Alternatively, the present solid solutions can be prepared by a method of preparing a pigment comprising
a) forming a suspension of a pigment mixture consisting of about 40-80 mol percent para-dimethyl DPP and about 60-20 mol percent para-dichloro DPP in a high boiling organic solvent,
b) heating the pigment mixture for sufficient time to produce a host-guest solid solution.

In general the binary component mixture consisting of para-dimethyl DPP and para-dichloro DPP is heated in a high boiling organic solvent at an elevated temperature ranging from 190 to 310 °C, in particular 240 to 280 °C for a period of time ranging from 15 minutes to 10 hours, in particular 0.5 to 5 hours. The heating period required depends on the particle size of the pigment crudes, with larger particle crudes requiring a longer heating period.

Generally, the binary component mixture consisting of para-dimethyl DPP and para-dichloro DPP is heated to an elevated temperature in an organic solvent or a mixture of organic solvents having a boiling point above 190 °C, preferably a boiling point in the range of 240 to 280 °C. Lower boiling organic solvents may be utilized, if they can be heated, for example, under pressure, to the temperatures required for the formation of the new solid solutions according to the present invention.

Examples of high boiling organic solvents include, but are not limited to aromatic solvents, like biphenyl, para-, meta or ortho-terphenyl, dibenzyltoluene, α-methyl- or β-methylnaphthalene, cyclic carbonates, like 1,3-dioxolan-2-one, ketones, like acetophenon or benzophenon, γ-butyrolactone and ethylene glycols, like Phe-Cellosolve or Bu-Cellosove, or mixtures thereof, in particular mixtures of di- and triarylethers, like Dowtherm GO. In a preferred embodiment the binary component mixture consisting of para-dimethyl DPP and para-dichloro DPP is suspended in Dowtherm G® and heated for about 0.5 to 2 hours at a temperature of 245 to 260 °C. The high boiling organic solvent is present in an amount from 3 to 20 parts, preferably 5 to 15 parts, by weight, per part of pigment. The workup involves separating the pigment mixture from the high boiling organic solvent, followed by washing and drying of the pigment mixture.

The mixture contains from 30-80 mol percent para-dimethyl DPP and 70-20 mol percent para-dichloro DPP. A further embodiment provides that the mixture consists of 35-65, in particular 45-55 mol percent para-dimethyl DPP and 65-35, in particular 55-45 mol percent of para-dichloro DPP. A still further embodiment employs an equimolar mixture of said DPP pigments.

Like many other pigments, the solid solution pigments of the present invention are advantageously surface treated by known methods to improve their performance in a variety of automotive and non automotive paint systems and in other applications.

The solid solutions are advantageously utilized as components of a pigment composition. In general, the pigment composition comprises, in addition to the solid solution, at least one additional component selected from the group consisting of an antiflocculating agent, a dispersant, a viscosity-modifying agent and a texture improving agent.

Quinacridone sulfonic acid or its salts, DPP sulfonic acid and its salts, pyrazolylmethylquinacridone, 2-pthalimidomethylquinacridone and other similar derivatives are suitable as additive antiflocculating agents. Polymeric dispersants, especially polyurethane-type polymeric dispersants, are particularly suitable as dispersants in the pigment compositions. Suitable viscosity-modifying agents include quinacridone sulfonic acids, diketopyrrolopyrrole sulfonic acids, a pyrazolylmethylquinacridone, a pyrazolylmethyldiketopyrrolopyrrole, a dimethylaminopropylquinacridone monosulfonamide, a dimethylaminopropylquinacridone disulfonamide, a phthalimidomethylquinacridone, a phthalimidomethyl DPP and mixtures thereof and salts of the acids; in particular quinacridone sulfonic acid or a salt thereof, especially the aluminum salt, and pyrazolylmethylquinacridone and mixtures thereof. Any texture improving agent is suitable as an additional component of the present pigment compositions to improve dispersability and performance in plastic systems; the calcium salt of abietic acid being particularly suitable.

The solid solutions of the present invention and pigment compositions containing the solid solutions are particularly useful as pigments for coloring high-molecular-weight organic materials. Therefore, the present invention further relates to a method of coloring a high-molecular-weight organic material which comprises incorporating an effective pigmenting amount of a solid solution of the present invention into the high-molecular-weight organic material, to a composition comprising the high weight organic material and an effective pigmenting amount of the host-guest solid solution according to the present invention and to a paint formulation comprising a liquid carrier and a tinctorially effective amount of a host guest solid solution according to the present invention. Examples of high molecular organic materials which may be colored or pigmented with the solid solutions of the invention are for example cellulose ethers and esters such as ethyl cellulose, nitrocellulose, cellulose acetate, cellulose butyrate, natural resins or synthetic resins such as polymerization resins or condensation resins, for example aminoplasts, in particular urea/formaldehyde and melamine/formaldehyde resins, alkyd resins, phenolic plastics, polycarbonates, polyolefins, polystyrene, polyvinyl chloride, polyamides, polyurethanes, polyesters, ABS, polyphenylene oxides, rubber, casein, silicone and silicone resins, singly or in mixtures.

The solid solutions of the invention are particularly suited for the coloring of a thermoplastic material selected from polyvinyl chloride, low, linear low or high density polyethylene and polypropylene, a thermoplastic elastomer resin, or copolymers thereof and a plastic that is subsequently calendered, cast, molded or processed to fibers as well as for the pigmenting of varnishes and paints, such as industrial and automotive paints, and inks.

The above high molecular organic compounds may be used singly or as mixtures in the form of plastic masses, melts or in the form of spinning solutions, varnishes, paints or printing inks. Depending on the end use, it is advantageous to use the solid solutions of the invention as toners or in the form of preparations.

The solid solutions of the invention may be used in an amount of 0.01 to 30% by weight, preferably 0.1 to 10% by weight, based on the high molecular organic material to be pigmented.

The pigmenting of the high molecular weight organic substances with the solid solutions of the invention is carried out for example by incorporating such a solid solution, optionally in the form of masterbatches into these substrates using roll mills, mixing or grinding machines.

The pigmented material is then brought into the desired final form by methods which are known per se, for example calendering, molding, extruding, coating, casting or by injection molding. It is often desirable to incorporate so-called plasticizers into the high molecular compounds before processing in order to produce non-brittle moldings or to diminish their brittleness. Suitable plasticizers are for example esters of phosphoric acid, phthalic acid or sebacic acid. The plasticizers may be incorporated before or after incorporating the composition into the polymers. To obtain different shades, it is also possible to add fillers or other chromophoric components such as white, colored or black pigments, in any amount, to the high molecular organic compounds, in addition to the solid solutions of the invention.

For pigmenting varnishes, paints and printing inks, the high molecular weight organic materials and the solid solutions of the invention, together with optional additives such as fillers, other pigments, siccatives or plasticizers, are finely dispersed or dissolved in a common organic solvent or mixture of solvents. The procedure may be such that the individual components by themselves, or also several jointly, are dispersed or dissolved and that all the components are only subsequently mixed.

In general, an effective pigmenting or a tinctorially effective amount is any amount which results in the desired coloristic properties in the final pigmented material. In general, an effective pigmenting or a tinctorially effective amount is from about 0.005 to about 30 mol percent , preferably 0.01 to 10 mol percent, of the pigment.

The present solid solutions are particularly useful for coloring high-molecular-weight organic materials that are used as coatings, in particular solvent-borne and water-borne paints. Acrylics, alkyds, polyesters, polyurethanes and combinations thereof are particularly useful as the high-molecular-weight organic material. The solid solutions possess very good light fastness properties, excellent tinctorial strength, excellent durability characteristics and exceptionally high color saturation when used in coating applications, in particular in automotive finishes and In plastics.

The present invention is further illustrated by the following non-limiting examples. Other embodiments may be readily apparent to those skilled in the art upon examination of the teachings herein. The scope of the invention is governed by the claims and is not intended to be restricted solely to the preferred embodiments provided in the following examples.

### EXAMPLE 1

10.0 grams (0.028 moles) of 1,4-diketo-3,6-bis(4-chlorophenyl)pyrrolopyrrole, 1.0 gram of an ester of a carboxylic acid and 40.0 grams of hydrated Al₂(SO₄)₃ are added to a 1.0 liter ball mill containing steel balls and nails as grinding media. After the mill is rolled for 18 hours, the contents are discharged and separated from the milling media. The resulting mill powder is stirred with 2% aqueous sulfuric acid for two hours at 90°C. The resulting slurry is filtered and washed with hot water until neutral and free of salts.

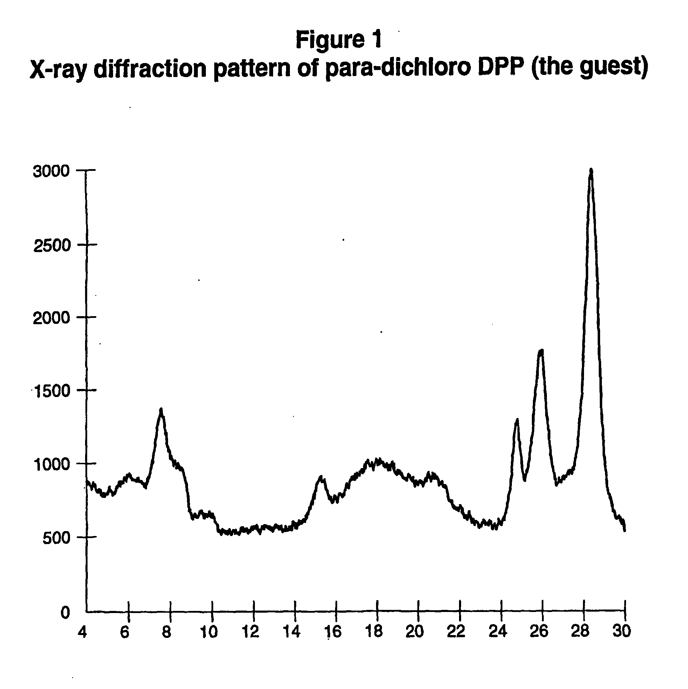

The small particle size bright red colored pigment showed an X-ray diffraction pattern of the starting material indicating no change in the crystal structure (see Figure 1).

### EXAMPLE 2

10.0 grams (0.0317 moles) of 1,4-diketo-3,6-bis(4-methylphenyl)pyrrolopyrrole, 1.0 gram of an ester of a carboxylic acid and 40.0 grams of hydrated Al₂(SO₄)₃ are added to a 1.0 liter ball mill containing steel balls and nails as grinding media. After the mill is rolled for 18 hours, the contents are discharged and separated from the milling media. The resulting mill powder is stirred with 2% aqueous sulfuric acid for two hours at 90 °C. The resulting slurry is filtered and washed with hot water until neutral and free of salts.

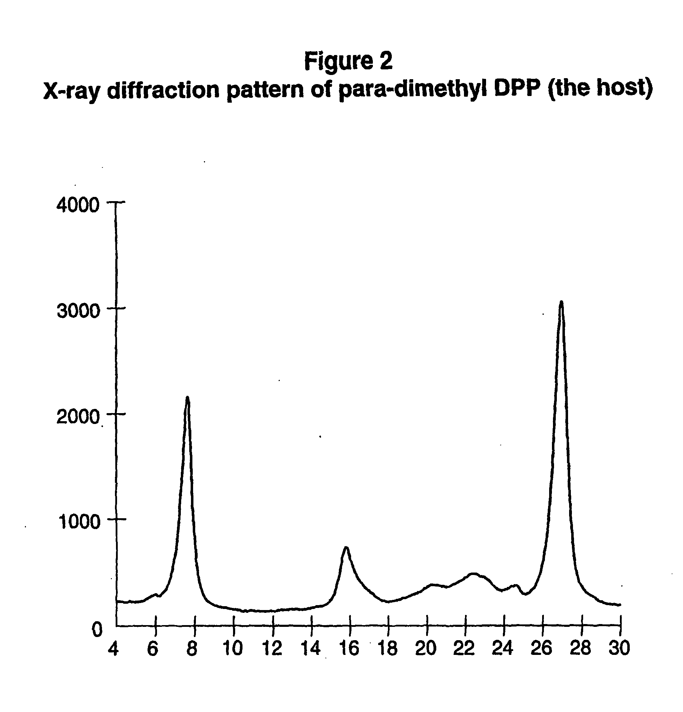

The small particle size bright red colored pigment showed an X-ray diffraction pattern of the starting material indicating no change in the crystal structure (see Figure 2).

| Interplanar spacings (d-values in Å) | Scattering angles (2Θ) | Relative intensity |
|---|---|---|
| 11.6301 | 7.602 | 71.44 |
| 5.6170 | 15.778 | 23.85 |
| 4.3747 | 20.300 | 12.26 |
| 3.9657 | 22.419 | 15.81 |
| 3.3109 | 26.929 | 100.00 |

### EXAMPLE 3

5.3 grams (0.0149 moles) of 1,4-diketo-3,6-bis(4-chlorophenyl)pyrrolopyrrole, 4.7 grams (0.0149 moles) of 1,4-diketo-3,6-bis(4-methylphenyl)pyrrolopyrrole, 1.0 gram of an ester of a carboxylic acid and 40.0 grams of hydrated Al₂(SO₄)₃ are added to a 1.0 liter ball mill containing steel balls and nails as grinding media. After the mill is rolled for 18 hours, the contents are discharged and separated from the milling media. The resulting mill powder Is stirred with 2% aqueous sulfuric acid for two hours at 90 °C. The resulting slurry is filtered and washed with hot water until neutral and free of salts.

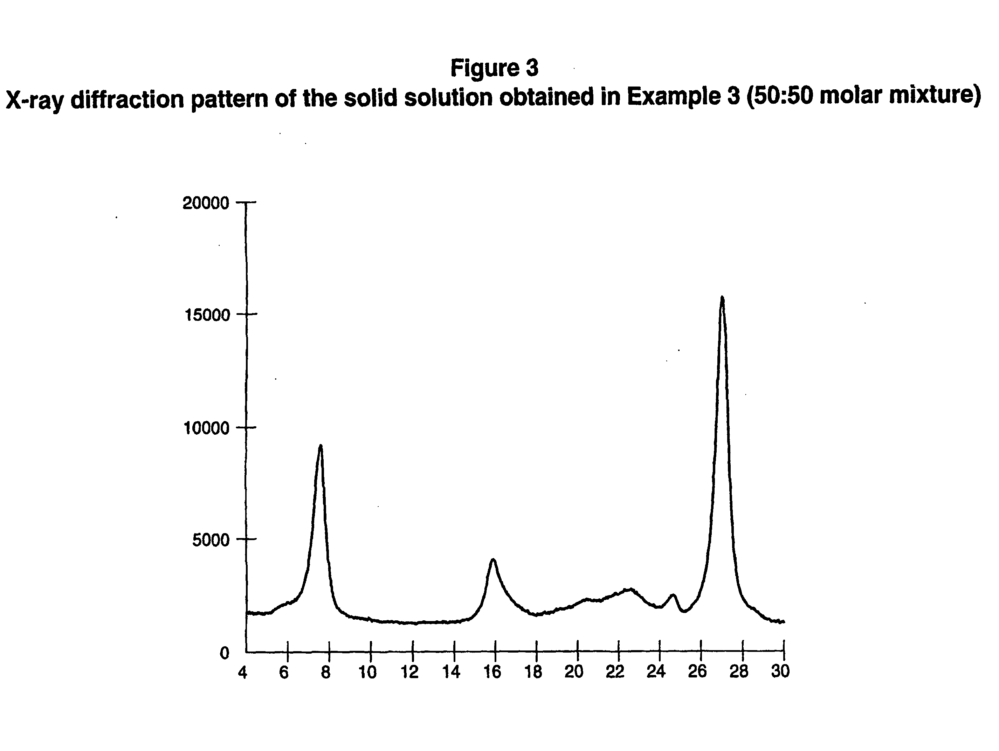

The small particle size red colored pigment showed an X-ray diffraction pattern of 1,4-diketo-3,6-bis(4-methylphenyl)pyrrolopyrrole indicating a Host-Guest solid solution wherein 1,4-diketo-3,6-bis(4-chlorophenyl)pyrrolopyrrole enters in to the crystal lattice of 1,4-diketo-3,6-bis(4-methylphenyl)pyrrolopyrrole (see Figure 3).

### EXAMPLE 4

EXAMPLE 3 is repeated except that the milling duration is 24 hours instead of 18 hours. The resulting pigment is a very transparent yellowish red colored Host-Guest solid solution with an x-ray diffraction pattern of 1,4-diketo-3,6-bis(4-methylphenyl)pyrrolopyrrole.

### EXAMPLE 5

EXAMPLE 3 is repeated except that the milling duration is 48 hours instead of 18 hours. The resulting host-guest solid solution pigment of yellowish red color with a dark masstone showed an X-ray diffraction pattern of 1,4-diketo-3,6-bis(4-methylphenyl) pyrrolopyrrole.

### EXAMPLE 6

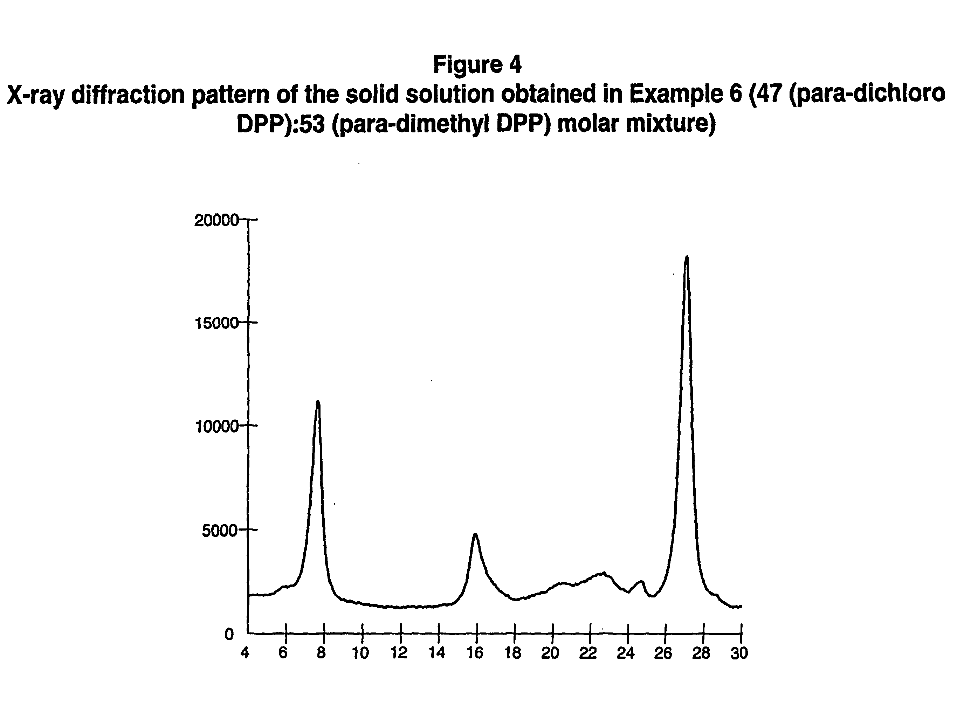

EXAMPLE 3 is repeated except that 5.0 grams of 1,4-diketo-3,6-bis(4-chlorophenyl) pyrrolopyrrole (0.014 moles) and 5.0 grams of 1,4-diketo-3,6-bis(4-methylphenyl)pyrrolopyrrole (0.0158 moles) are used. The resulting yellow shade red pigment is a host-guest solid solution in the crystal lattice of 1,4-diketo-3,6-bis(4-methylphenyl) pyrrolopyrrole (see Figure 4).

### EXAMPLE 7

EXAMPLE 3 is repeated with 6.0 grams (0.0168 moles) of 1,4-diketo-3,6-bis(4-chlorophenyl) pyrrolopyrrole and 4.0 grams (0.0127 moles) of 1,4-diketo-3,6-bis(4-methylphenyl)pyrrolopyrrole. The resulting solid solution pigment has the X-ray pattern of 1,4-diketo-3,6-bis(4-methylphenyl) pyrrolopyrrole.

### EXAMPLE 8

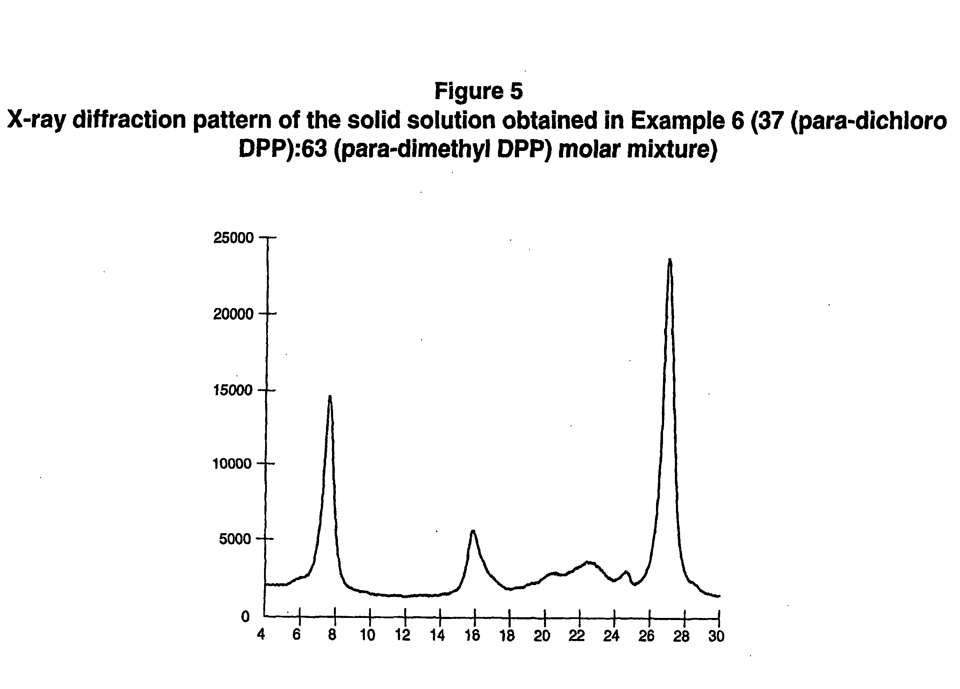

EXAMPLE 3 is repeated with 4.0 grams (0.0112 moles) of 1,4-diketo-3,6-bis(4-chlorophenyl) pyrrolopyrrole and 6.0 grams (0.019 moles) of 1,4-diketo-3,6-bis(4-methylphenyl)pyrrolopyrrole. The resulting solid solution pigment has the X-ray pattern of 1,4-diketo-3,6-bis(4-methylphenyl) pyrrolopyrrole (see Figure 5).

### EXAMPLE 9

A mixture of 92 parts of the presscake of the pigment prepared according to EXAMPLE 3 to EXAMPLE 8 and 4 parts each of pyrazolylmethylquinacridone and the aluminum salt of quinacridone monosulfonic acid are blended to uniformity, filtered, washed to pH 7.0, dried and then pulverized to prepare a pigment composition which demonstrates excellent rheological characteristics in solvent- or water-borne paint systems.

### EXAMPLE 10

### Solvent-based paint formulation

### Pigment Dispersion:

A pint jar is charged with 26.4 grams of the pigment composition of EXAMPLE - 9, 66.0 grams of an acrylourethane resin, 14.4 grams of a dispersant resin and 58.2 grams of a solvent (thinner). The mixture is milled using 980 grams of grinding media for 64 hours to prepare a pigment base containing 16% pigment and 48% solids at a pigment to binder ratio of 0.5.

### Aluminum Base:

An aluminum base is obtained by mixing 405 grams of aluminum paste (SPARKLE SILVER 5242-AR from SILBERLINE) with 315 grams of acrylic dispersion resin and 180 grams of acrylic resin in a quart can with an air mixer at slow to medium speed until lump-free (1-2 hrs.).

### Mica Base:

A mica base is prepared by mixing 251.1 grams of mica with 315 grams of acrylic dispersion resin and 180 grams of acrylic resin until the mica base is lump free.

### Mica Paint Formulation:

A mica basecoat paint formulation is prepared by mixing 122.4 grams of the pigment dispersion, 70.2 grams of the mica base, 20.8 grams of a nonaqueous dispersion resin, 30.6 grams of melamine resin, 2.6 grams of UV screener and 3.5 grams of catalyst. The final mica paint is prepared by diluting with xylene to a spray viscosity of 2.theta. seconds.

### Metallic Clear Solution:

A non-aqueous dispersion resin (1353 g), melamine resin (786.2 g), xylene (144.6 g), a UV screener solution (65.6 g) and acrylourethane resin (471.6 g), are added in the order given and mixed thoroughly with an air mixer for 15 minutes. 89.0 grams of a premixed solution of an acid catalyst and 90.0 grams methanol are added with continued mixing.

### Metallic Paint Formulation:

A basecoat paint consisting of 7.1% pigment and 54.4% solids with a pigment to binder ratio of 0.15 is prepared by mixing 35.5 grams of the pigment dispersion, 5.1 grams aluminum base, 5.3 grams nonaqueous dispersion resin and 54.1 grams metallic clear solution.

Aluminum panels treated with gray acrylic primer are sprayed with two coats of the basecoat paint to a film thickness of 15-20 microns on a dry film basis. The two sprayings were spaced by a 90 second flash at room temperature. After a flash of 3 minutes, an acrylic clear topcoat is applied by spraying two coats (90 second flash between coats) to a film thickness of 37-50 microns on a dry film basis. The panels are dried for 10 minutes at room temperature and baked at 120 °C for 30 minutes.

The coating is an attractive, intense yellowish red color with excellent two-tone and high gloss and distinctness of image.

### EXAMPLE 11

### Water-based paint formulation

### Pigment Dispersion:

A 1000 ml attritor with 1300 grams of ceramic milling media is charged with 45.5 grams of the pigment composition of EXAMPLE - 9, 45.5 grams of acrylic resin and 259.0 grams of deionized water. The formulation is stirred at 500 rpm for 20 hours to yield a pigment dispersion containing 13% pigment and 26% solids at a pigment to binder ratio of 0.5.

### Aluminum Base:

40.0 grams of aluminum paste, 10.0 grams of melamine resin and 50.0 grams of butyl cellosolve are mixed until lump free.

### Basecoat Paint Formulation:

A basecoat paint is prepared by mixing 46.3 grams of the pigment dispersion, 4.3 grams of the aluminum base and a combination of 56.7 grams of a balancing clear and 45.8 grams of a compensating clear, which are mixtures of acrylic and melamine resins. The formulation corresponds to a pigment to binder ratio of 0.25.

Aluminum panels, which are pretreated with a gray acrylic primer, are sprayed with the basecoat paint to an acceptable level of hiding. The basecoat is air dried for 30 minutes and then dried at 106 °C for 15 minutes before clear coating. Two costs of clearcoat are then applied and air dried for 60 minutes before baking at 122 °C for 30 minutes.

The coating exhibits an attractive, intense color with excellent two-tone, high gloss and distinctness of image.

### EXAMPLE 12

A 0.5 liter flask equipped with thermometer, stirrer and condenser is flushed with nitrogen and then charged with 5.3 grams (0.0149 moles) of 1,4-diketo-3,6-bis(4-chlorophenyl)pyrrolopyrrole, 4.7 grams (0.0149 moles) of 1,4-diketo-3,6-bis(4-methylphenyl)pyrrolopyrrole and 100 ml Dowtherm G® (Dow Chemicals). The suspension is stirred, heated to 245 to 260 °C and kept stirring for 2 hours at 245 to 260 °C. The suspension is cooled to room temperature, diluted with 100 ml methanol and filtrated. The presscake is washed with methanol, followed by water and dried at 80 °C.

The bluish red colored pigment showed an X-ray diffraction pattern of 1,4-diketo-3,6-bis(4-methylphenyl)pyrrolopyrrole indicating a Host-Guest solid solution wherein 1,4-diketo-3,6-bis(4-chlorophenyl)pyrrolopyrrole enters into the crystal lattice of 1,4-diketo-3,6-bis(4-methylphenyl)pyrrolopyrrole.

| Double glancing angles (2 theta) | Relative intensity |
|---|---|
| 7.54 | 90 |
| 15.71 | 26 |
| 27.01 | 100 |

### EXAMPLE 13

Example 12 is repeated, except that 3.56 grams (0.01 mole) instead of 5.3 grams (0.0149 mole) of 1,4-diketo-3.6-bis (4-chlorophenyl)pyrrolopyrrole, and 6.31 grams (0.02 mole) instead of 4.7 grams (0.0149 mole) of 1,4-diketo-3,6-bis(4-methylphenyl)pyrrolopyrrole are used.

As in example 12 the bluish red colored pigment showed an X-ray diffraction pattern of 1,4-diketo-3,6-bis(4-methylphenyl)pyrrolopyrrole.

| Double glancing angles (2 theta) | Relative intensity |
|---|---|
| 7.48 | 90 |
| 15.66 | 10 |
| 26.93 | 100 |

The X-ray diffraction pattern of 1,4-diketo-3,6-bis(4-methylphenyl)pyrrolopyrrole, the host compound, is characterised by the following data:

| double glancing angle (2Θ) | relative intensity (%) |
|---|---|
| 7.43 | 100 |
| 15.53 | 30 |
| 26.71 | 76 |

The X-ray spectra are determined according to conventional methods using a Siemens D500® X-ray diffractometer (CuKₐ radiation).

## Claims

1. A host-guest solid solution consisting of 30-80 mol percent of para-dimethyl DPP and 70-20 mol percent of para-dichloro DPP, wherein the X-ray diffraction pattern of the host-guest solid solution is identical to the X-ray diffraction pattern of a para-dimethyl DPP pigment and wherein identical indicates that the X-ray spectrum of the host-guest solid solution corresponds to the X-ray spectrum of the para-dimethyl DPP, except that characteristic glancing angle shifts of the individual reflections occur as a result of lattice expansion or contraction in the region of +/- 0.5 2 theta, or as a result of variations in intensity.

2. A host-guest solid solution according to claim 1 consisting of 35-65 mol percent of para-dimethyl DPP and 65-35 mol percent of para-dichloro DPP

3. A method of preparing a solid solution according to claim 1 or 2 comprising
a) forming a suspension of a pigment mixture consisting of 30-80 mol percent para-dimethyl DPP and 70-20 mol percent para-dichloro DPP in a high boiling organic solvent,
b) heating the pigment mixture for sufficient time to produce a host-guest solid solution.

4. A method according to claim 3 wherein the high boiling organic solvent is selected from the group consisting of biphenyl, para-, meta or ortho-terphenyl, dibenzyltoluene, α-methyl- or β-methylnaphthalene, 1,3-dioxolan-2-one, acetophenone, benzophenone, γ-butyrolactone, Phe-Cellosolve, Bu-Cellosove or mixtures thereof, or mixtures of di- and triarylethers.

5. A method of preparing a solid solution according to claim 1 or 2 comprising
a) forming a pigment mixture consisting essentially of 30 to 80 weight percent para-dimethyl DPP and 70 to 20 weight percent para-dichloro DPP,
b) milling the pigment mixture for sufficient time to produce a host-guest solid solution.

6. A method according to claim 5 wherein the mixture is milled in the presence of a particle size reducing effective amount of a milling salt.

7. A method according to claim 5 wherein the milling salt is hydrated aluminum sulfate.

8. A composition comprising a high molecular weight organic material and an effective pigmenting amount of a solid solution according to claim 1 or 2.

9. Use of the host-guest solid solution according to claim 1 or 2 for coloring a high molecular weight organic material.

10. A paint formulation comprising a liquid carrier and a tinctorially effective amount of a host-guest solid solution according to claim 1 or 2.

## Patentansprüche

1. Einschlußfeststofflösung, bestehend aus 30 bis 80 mol-% para-Dimethyl-DPP und 70 bis 20 mol-% para-Dichlor-DPP, wobei das Röntgenbeugungsmuster der Einschlußfeststofflösung identisch mit dem Röntgenbeugungsmuster eines para-Dimethyl-DPP-Pigments ist, und wobei identisch angibt, daß das Röntgenspektrum der Einschlußfeststofflösung dem Röntgenspektrum des para-Dimethyl-DPP entspricht, außer daß charakteristische Glanzwinkelverschiebungen der einzelnen Reflexionen infolge der Gitterexpansion oder -kontraktion in dem Bereich von +/- 0,5 2 Theta oder infolge der Veränderungen der Intensität auftreten.

2. Einschlußfeststofflösung nach Anspruch 1, bestehend aus 35 bis 65 mol-% para-Dimethyl-DPP und 65-35 mol-% para-Dichlor-DPP.

3. Verfahren zur Herstellung einer Feststofflösung nach Anspruch 1 oder 2, umfassend
a) Bilden einer Suspension eines Pigmentgemisches, bestehend aus 30 bis 80 mol-% para-Dimethyl-DPP und 70 bis 20 mol% para-Dichlor-DPP in einem hochsiedenden organischen Lösungsmittel,
b) Erhitzen des Pigmentgemisches für einen ausreichenden Zeitraum zur Herstellung einer Einschlußfeststofflösung.

4. Verfahren nach Anspruch 3, wobei das hochsiedende organische Lösungsmittel aus der Gruppe ausgewählt ist, bestehend aus Biphenyl, para-, meta- oder ortho-Terphenyl, Dibenzyltoluol, α-Methyl- oder β-Methylnaphthalin, 1,3-Dioxolan-2-on, Acetophenon, Benzophenon, γ-Butyrolacton, Phe-Cellosolve, Bu-Cellosolve oder Gemischen davon, oder Gemischen aus Di- und Triarylethern.

5. Verfahren zur Herstellung einer Feststofflösung nach Anspruch 1 oder 2, umfassend
a) Bilden eines Pigmentgemisches, im wesentlichen bestehend aus 30 bis 80 Gew.% para-Dimethyl-DPP und 70 bis 20 Gew.-% para-Dichlor-DPP,
b) Mahlen des Pigmentgemisches für einen ausreichenden Zeitraum zur Herstellung einer Einschlußfeststofflösung.

6. Verfahren nach Anspruch 5, wobei das Gemisch in Gegenwart einer effektiven Teilchengrößen-verringernden Menge eines Mahlsalzes gemahlen wird.

7. Verfahren nach Anspruch 5, wobei das Mahlsalz hydratisiertes Aluminiumsulfat ist.

8. Zusammensetzung, umfassend ein organisches Material mit hohem Molekulargewicht und einer effektiven pigmentierenden Menge einer Feststofflösung nach Anspruch 1 oder 2.

9. Verwendung der Einschlußfeststofflösung nach Anspruch 1 oder 2 zum Färben eines organischen Materials mit hohem Molekulargewicht.

10. Anstrichformulierung, umfassend einen flüssigen Träger und eine effektiv färbende Menge einer Einschlußfeststofflösung nach Anspruch 1 oder 2.

## Revendications

1. Solution solide hôte-invité constituée par 30 à 80 % molaires de para-diméthyl-DPP et de 70 à 20 % molaires de para-dichloro-DPP, où la figure de diffraction des rayons X de la solution solide hôte-invité est identique à la figure de diffraction des rayons X d'un pigment de type para-diméthyl-DPP et où identique indique que le spectre des rayons X de la solution solide hôte-invité correspond au spectre des rayons X du para-diméthyl-DPP, à l'exception que les décalages caractéristiques de l'angle d'ouverture des réflexions individuelles se produisent comme résultat de l'expansion ou de la contraction du réseau dans la région de +/- 0,5 2 thêta, ou comme résultat des variations dans l'intensité.

2. Solution solide hôte-invité selon la revendication 1 constituée par 35 à 65 % molaires de para-diméthyl-DPP et de 65 à 35 % molaires de para-dichloro-DPP.

3. Procédé pour la préparation d'une solution solide conformément à la revendication 1 ou 2 comprenant
a) la formation d'une suspension d'un mélange de pigments renfermant de 30 à 80 % molaires de para-diméthyl-DPP et de 70 à 20 % molaires de para-dichloro-DPP dans un solvant organique de haut point d'ébullition,
b) le chauffage du mélange de pigments pendant une durée suffisante afin de produire une solution solide hôte-invité.

4. Procédé selon la revendication 3, où le solvant organique de haut point d'ébullition est pris dans le groupe comprenant le biphényle, le para-, méta ou ortho-terphényle, le dibenzyltoluène, l'α-méthyl- ou le β-méthylnaphtalène, la 1,3-dioxolan-2-one, l'acétophénone, la benzophénone, la γ-butyrolactone, le Phe-Cellosolve, le Bu-Cellosove ou leurs mélanges, ou des mélanges d'éthers di- et tri- aryliques.

5. Procédé pour la préparation d'une solution solide selon la revendication 1 ou 2 comprenant
a) la formation d'un mélange de pigments comprenant essentiellement de 30 à 80 % en masse de para-diméthyl-DPP et de 70 à 20 % en masse de para-dichloro-DPP,
b) le broyage du mélange de pigments pendant une durée suffisante en vue de produire une solution solide hôte-invité.

6. Procédé selon la revendication 5, où le mélange est broyé en présence d'un sel de broyage en quantité efficace pour réduire la taille des particules.

7. Procédé selon la revendication 5, où le sel de broyage est le sulfate d'aluminium hydraté.

8. Composition comprenant une matière organique de haut poids moléculaire et une quantité à efficacité pigmentaire d'une solution solide selon les revendications 1 ou 2.

9. Utilisation de la solution solide hôte-invité selon la revendication 1 ou 2 pour la coloration d'une matière organique de haut poids moléculaire.

10. Formulation de peinture comprenant un véhicule liquide et une quantité à efficacité tinctoriale d'une solution solide hôte-invité selon les revendications 1 ou 2.
